Europäisches Patentamt

European Patent Office

Office européen des brevets

(11) Numéro de publication: **0 275 721**
**A1**

(12) **DEMANDE DE BREVET EUROPEEN**

(21) Numéro de dépôt: 87400137.3

(22) Date de dépôt: **20.01.87**

(51) Int. Cl.4: **G06F 15/70** , G01N 21/88 , G06K 9/50

(43) Date de publication de la demande:
**27.07.88 Bulletin 88/30**

(84) Etats contractants désignés:
**AT BE CH DE GB IT LI LU NL SE**

�temandeur: **CENTAURE ROBOTIQUE Sarl**
**42-44 Rue des Meuniers**
**F-93100 Montreuil(FR)**

(72) Inventeur: **Billiotte, Jean-Marie**
**8 place des Fédérés**
**F-93160 Noisy le grand(FR)**
Inventeur: **Bouin, Thierry**
**Résidence le Nerprun**
**F-28500 Boutigny(FR)**
Inventeur: **Primat, Didier**
**15 chemin de Bois Caran Collonge Bellerive**
**CH-1245 Genève(CH)**
Inventeur: **Basset, Frédéric**
**33 rue Frémicourt**
**F-75015 Paris(FR)**
Inventeur: **Beauvois, Jacques**
**3 place des Vosges**
**F-75004 Paris(FR)**

(74) Mandataire: **Pinguet, André**
**CAPRI 28 bis, avenue Mozart**
**F-75016 Paris(FR)**

(54) **Procédé automatique, d'analyse optique et de contrôle électronique ligne par ligne du graphisme d'une scène bidimentionnelle, par suivi de formes.**

㊗ L'invention concerne un procédé de contrôle optique et électronique du graphisme d'une scène par méthode absolue.

Ce procédé consiste à effectuer une saisie, ligne par ligne, d'images linéaires de la scène.

Préalablement au traitement de chaque ligne d'indice (j), on mémorise un Fichier de formes électronique (F,j-1) représentatif des formes antérieurement intersectées et de leur évolution précédente. Ce Fichier de formes (F,j-1) comporte des tableaux de paramètres liés à la géométrie, à l'age, à là largeur des formes en cours.

A chaque ligne d'indice (j), on met à jour un tableau numérique électronique de segments (sj) représentatif de l'évolution des formes au cours de la ligne. A partir du Fichier de formes (F,j-1) et du tableau de segments (sj) :
- d'une part, on détermine à partir de règles numériques de suivi de formes un nouveau Fichier de formes (Fj),
- et d'autre part, on met à jour, à partir de règles de contrôle numériques d'évolution de formes, les alarmes de défauts de la ligne.

Les règles de suivi et de contrôle d'évolution de formes sont mémorisées sous forme de tableau numérique.

Le procédé de l'invention est d'une application particulièrement avantageuse dans le domaine du contrôle automatique des produits industriels présentant un graphisme de surface à haute densité, tels que les circuits imprimés et les circuits intégrés.

2

Procédé automatique de contrôle optique et électronique d'une scène par suivi de formes

$F_j =$
- $(\beta, \lambda, i . coul)$
- $(\beta, \lambda, i . compt)$
- $(\beta \lambda . i . dim)$
- $(\beta \lambda . i . rep)$

$(j)$ = Indice de ligne = 0
$(F_j)$ = Fichier de forme = 0 — 101

- Saisie Image Primaire $(I.j)$
- Générateur Signal anal. prim $(\lambda.a.j)$ — 102

- Digitalisation $(\lambda.a.j)$
- Génération signal bin. second. $(\lambda bj)$ — 103

- Traitement $(\lambda . \beta j)$
- Génération tableau Segments
$(\lambda, j, i) = \lambda (j, i, \lambda \beta j)$ — 104

Traitement électronique suivi formes

Traitement Segment — 105

Génération Fichier Segment $(S, \lambda)$ — 106

Mise à jour nouveau Fichier formes $(F \lambda)$ — 107

Mémorisation Fichier Formes $(F_j)$ — 108

Application des Règles de suivi d'évolution de formes ➤

Traitement formes — 109

Générateur alarmes — 110

Application des Règles de contrôle d'évolution de formes ➤

$j^{++}$

Fin       $j < Jmax$

FIG 5

## PROCEDE AUTOMATIQUE, D'ANALYSE OPTIQUE ET DE CONTROLE ELECTRONIQUE LIGNE PAR LIGNE DU GRAPHISME D'UNE SCENE BIDIMENTIONNELLE, PAR SUIVI DE FORMES

La présente invention concerne l'inspection et le contrôle automatique par voie optique et électronique de produits manufacturés ou d'objets plans. Elle concerne plus spécialement un procédé automatique d'analyse et de contrôle, ligne par ligne, d'une scène bidimentionnelle, comportant au moins deux niveaux de modulation pour un faisceau d'ondes électromagnétiques d'analyse.

Des procédés de ce type sont utilisés, dans divers domaines de l'industrie, dits de contrôle et d'inspection par traitement d'images. L'accroissement du nombre des produits manufacturés, la diminution de la taille de certains de leurs composants, notamment des éléments électroniques, et le coût de la main-d'oeuvre assurant le contrôle, tendent à imposer des techniques de contrôle par vision artificielle utilisant ;

- une ou plusieurs caméras, pour capter des images des produits à contrôler et délivrer un signal électrique représentatif de ces images,

- et un système électronique intelligent, notamment à microprocesseur, pour traiter le signal électrique et reconnaître selon un algorithme spécifique, tel ou tel défaut.

On peut classer les procédés d'inspection par analyse d'images principalement en deux catégories :
- les techniques par comparaison,
- et les techniques absolues.

Les techniques du premier type, fonctionnant par comparaison, sont les plus fréquentes pour le contrôle des produits industriels à haute densité de figures, tels les circuits imprimés ou les circuits intégrés.

On prendra ce domaine industriel comme référence et exemple dans l'analyse de l'art antérieur et la description de l'invention qui suivent. Mais les problèmes et principes de contrôle de ce domaine sont équivalents à ceux qui peuvent être mis en oeuvre dans de nombreux autres domaines d'activité.

Le principe général de cette méthode de contrôle optique et électronique, par comparaison, est décrit dans la demande de brevet français n° 2 321 229 CIT ALCATEL, ayant pour titre "Procédé et appareillage pour le contrôle automatique du graphisme". Le procédé décrit dans ce document est relatif au contrôle des circuits imprimés. Il consiste en une exploration homologue de deux plaques de circuits imprimés, par deux caméras linéaires. L'une des plaques constitue un circuit de référence jugé sans défaut. L'autre plaque est analysée concomitamment, par comparaison, avec la plaque étalon. Les signaux analogiques primaires correspondants, générés en parallèle par les deux caméras sont chacun binarisés par rapport à un seuil, en deux signaux logiques secondaires. La comparaison électonique entre les signaux logiques secondaires permet la délivrance d'un signal de défaut en cas de non concordance.

On peut remarquer que les principes de contrôle optique et électronique de ce type, fonctionnant par comparaison, ne gardent en mémoire aucune histoire des évolutions de formes rencontrées précédemment. Le contrôle s'effectue par comparaison entre une ligne ou une zone d'un circuit de référence et une zone équivalente du circuit à contrôler optiquement. Cette solution permet d'aboutir à une grande simplicité de conception des systèmes, au niveau électronique. C'est la raison pour laquelle, elle a tout d'abord recontré un grand succès.

Par contre, les défauts principaux de cette méthode résident dans :
- sa très grande sensibilité aux inhomogénéités, aux micro déformations locales, ou aux déformations globales, sans conséquence avec le bon fonctionnement des produits inspectés,
- et dans la difficulté de distinguer, parmi les défauts détectés, ceux qui sont graves et ceux qui le sont moins.

C'est la raison pour laquelle des améliorations à cette première méthode de contrôle optique par comparaison ont été recherchées et sont décrites dans divers documents plus récents parmi lesquels on peut citer les suivants.

Le brevet US 4 056 716, IBM, ayant pour titre "Defect inspection of objects such as electronic circuits" décrit une variante de la méthode par comparaison, consistant, non pas à comparer l'image d'un circuit avec celle d'un autre circuit scanné dans les mêmes conditions de précision, mais au contraire à comparer l'image du circuit à contrôler avec l'image à faible résolution d'un circuit de référence. Cette formule permet de réduire le nombre des fausses alarmes. Par contre, elle privilégie la détection de petits défauts et ne permet pas un tri parmi les défauts en fonction de leur environnement.

Pour tenter de résoudre ce même problème, le brevet US 4 148 065, HITACHI, ayant pour titre "Method and apparatus for automatically inspecting and correcting masks" décrit une autre variante de la méthode par comparaison. Selon cette méthode, la binarisation entre l'image de référence et l'image de contrôle se fait sur un nombre de bits minimum, de telle manière qu'un bit corresponde à la largeur minimum des figures inspectées. L'algorithme concerné consiste à rechercher, sur chacune des deux images, toutes les formes plus petites que la taille minimale d'une figure et de soustraire entre eux les défauts détectés relatifs aux deux images. Le résultat de la soustraction est considéré représenter les défauts. Le document décrit également un moyen de limiter les erreurs dues aux effets de bord en appliquant un principe de seuillage par zone.

Le défaut de la méthode consiste d'une part, en ce que l'on ne peut pas détecter des défauts plus grands que la largeur minimale d'une figure, notamment les grandes coupures. D'autre part, on ne peut pas distinguer parmi les défauts détectés ceux qui sont graves de ceux qui le sont moins.

Enfin la demande de brevet européen 0 004 505, THOMSON-CSF, ayant pour titre "Système de contrôle d'un dessin inscrit sur un support plan" décrit une amélioration aux procédés de contrôle par comparaison, visant à s'affranchir des effets inévitables de décalage entre l'élément contrôlé et l'élément de référence. Le procédé général décrit, consiste à inspecter, ligne par ligne, chacun des circuits, à mémoriser un certain nombre de lignes et à comparer la configuration de pixels d'une ligne, non seulement avec la configuration homologue de l'autre circuit, mais également avec toutes les configurations pouvant se trouver faiblement décalées dans le pourtour de la zone homologue.

Malgré leur simplicité de conception, les procédés de contrôle optique et électronique par comparaison, notamment du type décrit dans les documents ci-dessus, possèdent tous les mêmes défauts liés à leur conception :
- très grande sensibilité au bruit (inhomogénéités de l'éclairage, irrégularités du matériau, structure du matériau ...) ;
- incapacité de distinguer la gravité des défauts et de classer ces défauts par types ;
- difficulté de mise en oeuvre et d'adaptabilité dans le cas de produits industriels de types différents, le contrôle nécessitant toujours le traitement en parallèle d'un circuit de référence ;
- nécessité de placer les circuits dans des positions très précises afin qu'ils puissent se correspondre.

C'est la raison pour laquelle, un second type de procédé de contrôle consiste en une analyse absolue, sans référence.

Une première variante de cette méthode de contrôle absolue est décrite dans la demande de brevet US 4 305 097, SIEMENS, ayant pour titre "Automated opto electronic test system for quality control of two dimensional elements with high geometric figure density". La méthode consiste en une analyse de formes zone par zone. C'est-à-dire que l'on réalise une série d'images rectangulaires recouvrant tout le produit à contrôler. On digitalise chaque image, et on lui applique des algorithmes spécifiques de traitement de formes telles que : règles de largeurs minimales de conducteur et d'isolant.

La méthode décrite est originale par le fait qu'elle recommande, en fonction des algorithmes appliqués successivement, de travailler à diverses résolutions. En particulier, sur des images à basse résolution réalisées à partir des premières, saisies à plus haute résolution, on applique des algorithmes de recherche de formes, par comparaison avec des formes de référence mémorisées, afin de détecter des configurations particulières de défauts simples. Ce type de méthode absolue fonctionnant par analyse de zones rectangulaires, présente divers défauts.
- D'une part, il nécessite de travailler sur des images rectangulaires, en sorte qu'il nécessite l'utilisation d'une taille mémoire importante si l'on souhaite une bonne résolution,
- D'autre part, il met en oeuvre des algorithmes de recherche de formes par zone qui, soit sont peu performants, soit nécessitent des temps de traitement très longs et un matériel onéreux.
- Ses capacités d'investigation sont faibles.
- Enfin, l'appareil doit comprendre un processus par type de défauts recherchés.

De plus les algorithmes de recherche de formes décrits sont difficilement câblables électroniquement car ils ne possèdent aucune structure répétitive commune. Leur étude ainsi que les cartes processeurs s'y rapportant doivent être reprises pour chaque application comprenant une topologie différente de formes.

Une seconde variante de cette méthode de contrôle absolue est décrite dans un document intitulé "Automatic copper pattern inspection system for printed wiring boards" édité lors de la Session "printed circuit convention III" du 22-25 mai 1984 à Washington. Ce document décrit un système de contrôle pour circuits imprimés présentant les caractéristiques suivantes :
- grâce à un principe optique, à large profondeur de champ, utilisant un faisceau laser rétrodiffusé, on effectue le contrôle à trois dimensions sur deux niveaux, des pistes de cuivre,
- par ailleurs, le processus de contrôle non comparatif est assuré par une coordination entre plusieurs capteurs disposés dans des configurations spécifiques.

Le processus de traitement repose sur le fait que si l'on dispose côte à côte, dans une certaine configuration une pluralité de capteurs constituant une grille de géométrie spécialement adaptée, il existe pour chaque type de défauts d'images, une configuration spécifique de l'image située sur la grille

4

constituée par l'ensemble des capteurs. Le procédé consiste, grâce à un traitement électronique spécifique, à distinguer les différentes configurations d'images caractéristiques de défauts, sur la grille des capteurs, en déplaçant la scène vis-à-vis de l'ensemble des capteurs.

Les défauts de cette méthode absolue sont les suivants :

- Elle nécessite l'emploi conjoint d'une multitude de capteurs répartis de surcroît dans des directions différentes. Le coût d'un tel système est de ce fait très élevé.

- Par ailleurs, l'image générée de la portion traitée doit être de grande dimension pour recouvrir l'ensemble de la grille. Cette configuration rend particulièrement difficile l'éclairage du circuit.

- De plus, si l'on utilise une méthode d'éclairage spéculaire, on est contraint d'éclairer l'objet à traiter sous incidence normale, ce qui complique considérablement le système,

- Au surplus, la configuration des capteurs n'est adaptée qu'à un traitement particulier de formes. Le traitement de tout nouveau type de formes nécessite une reconstruction complète de la configuration des capteurs.

- Enfin, le traitement effectué zone par zone est lent et complexe, en sorte que, comme le précise le document, il faut un temps très long (de 7,5 minutes) pour inspecter un circuit de (290 mm x 360 mm) avec une résolution de 10 microns.

La lenteur de fonctionnement d'un tel processus est incompatible avec les vitesses de contrôle requises dans l'industrie moderne notamment de l'électronique, où des milliers de pièces doivent souvent être contrôlées chaque jour.

Le but de l'invention telle qu'elle est revendiquée ci-après de résoudre globalement ces inconvénients.

Ainsi, un premier but de l'invention est de proposer un procédé très rapide permettant d'analyser et contrôler automatiquement le graphisme d'une scène bidimentionnelle.

Un second but de l'invention est de proposer un procédé d'analyse et de contrôle automatique d'une scène bidimentionnelle dont les étapes peuvent être réalisées très facilement et avec un nombre de composants minimal, sur un processeur életronique câblé.

Un troisième but de l'invention est de proposer un procédé d'analyse et de contrôle automatique d'une scène bidimentionnelle, sans comparaison et qui puisse effectuer sans interrruption le contrôle des pièces de graphismes très différents.

Un quatrième but de l'invention est de proposer un procédé d'analyse et de contrôle automatique d'une scène bidimentionnelle, fonctionnant avec une mémoire limitée et une architecture électronique très simple, par suivi de formes, et permettant d'effectuer un classement des types de défauts rencontrés.

Un cinquième but de l'invention est de proposer un procédé d'analyse et de contrôle automatique d'une scène bidimentionnelle, pouvant être mis en oeuvre électroniquement, en temps réel, pour traiter un signal d'images, en sortie d'une caméra, en particulier d'une caméra linéaire, fonctionnant à une trés grande vitesse d'acquisition.

Un sixième but de l'invention est de proposer un procédé d'analyse et de contrôle automatique présentant une grande souplesse et adaptabilité d'utilisation : ce procédé étant conçu de telle manière qu'une fois câblé électroniquement il puisse être adapté à un grand nombre de graphismes et de règles de contrôle différents par simple téléchargement de tableaux numériques en mémoire du processeur correspondant.

Le procédé automatique d'analyse et de contrôle de l'invention est effectué, ligne par ligne, sur le graphisme d'une scène bidimentionnelle.

Bien que décrit plus loin sur une application très spécifique liée au contrôle des circuits imprimés , le procédé de contrôle de l'invention est applicable au contrôle de toute scène présentant un graphisme de surface. La seule condition d'application du procédé de l'invention est que la scène comporte au moins deux niveaux de modulation pour un faisceau d'ondes électromagnétiques d'analyse. Le premier niveau de modulation de la scène est caractéristique d'une série de formes primaires distantes les unes des autres, alors que le second niveau de modulation se rapporte à une série de formes secondaires situées dans l'intervalle entre les différentes formes primaires.

Le procédé de l'invention permet, en fonction de règles géométriques spécifiques établies à l'avance, et mémorisées notamment sous forme de tableaux numériques, de contrôler le graphisme à la fois des formes primaire et secondaire, de déterminer automatiquement les endroits de la scène où ces règles sont enfreintes, de générer des alarmes, et de déterminer la nature des défauts.

Le principe général consiste non pas à comparer des formes homologues de deux objets dont l'un constitue une référence, ni de mettre en oeuvre des algorithmes spécifiques complexes et lents, notamment de recherche de formes, sur des images rectangulaires de zones successives des objets, mais à suivre ligne par ligne et automatiquement l'évolution des formes, en gardant sous forme numérique et à l'aide d'un nombre de paramètres limités, une histoire des formes précédentes que l'on remet à jour à chaque ligne. La détection des anomalies d'évolution permet de découvrir les défauts du graphisme.

Dans sa forme générale, le procédé d'analyse optique et de contrôle électronique de l'invention est du second type, dit absolu, décrit plus haut.

Il consiste, de manière classique :

- à émettre un faisceau d'ondes électromagnétiques en direction d'une scène (5),
- à saisir une image modulée de la portion de scène éclairée par le faisceau d'ondes électromagnétiques,
- à extraire de la portion de scène éclairée, une succession d'images linéaires (I,j) parallèles et adjacentes, dont la réunion constitue une bande inspectée (B) de la scène (S),
- à délivrer successivement, et pour chaque image linéaire (I,j), traitée, d'indice (j), un signal analogique primaire (saj), dont les variations de niveaux sont représentatives séquentiellement, des zones de formes intersectées par l'image linéaire (I,J),
- à digitaliser, pour chaque image linéaire (I,j), traitée, le signal analogique primaire (saj) afin de le transformer, par seuillage en un signal binaire secondaire (sbj) de (n) digits sous forme séquentielle, à l'intérieur duquel la présence du premier digit est significatif de l'intersection de la ligne (I,j), à cet endroit, avec une forme primaire (Ck), et le second digit est significatif de l'intersection de la ligne avec une forme secondaire (El).

En outre les digits côte à côte d'un même type, dit couleur, constituent des segments jointifs représentant l'intersection de l'image linéaire (I,j), traitée avec les formes primaire (Ck) et secondaire (El) de la scène (S).

Vis-à-vis des procédés usuels d'analyse et de contrôle automatique de graphismes fonctionnant par méthodes optique et électronique du type absolu et opérant ligne par ligne, le procédé de l'invention est remarquable, notamment par le fait que :

- L'on établit successivement, avant le traitement d'une nouvelle ligne d'indice (j). et l'on mémorise, un Fichier électronique évolutif de formes (F,j-1), comportant un certain nombre de paramètres numériques, (f,j-1,i.coul), (f,j-1,i.compt), (f,j-1,i.état) (f,j-1,i.ref), représentatifs des formes précédemment intersectées et de leur évolution sur la portion (bj-1)de la bande (B) antérieurement traitée ligne par ligne.

- Au cours du traitement de ligne (j), l'on traite le signal binaire secondaire (sbj) relatif à la ligne (j), et on détermine électroniquement, pour la ligne (j), un tableau numérique électronique de segments (s,j) relatif aux caractéristiques géométriques, de position et de couleur des segments de l'image linéaire (1,j).

- Enfin, à partir à la fois du Fichier électronique de formes (F,j-1) et du tableau électronique de segments (s,j) de la ligne, on établit électroniquement, selon des règles fixes numériques, dîtes de suivi d'évolution de formes, un nouveau Fichier électronique de formes (F,j ) qui sera exploité au cours de la ligne suivante d'indice (j + 1).

D'autres caractéristiques et avantages de l'invention ressortent de la description qui va suivre en regard des dessins annexés, lesquels descriptions et dessins ne sont donnés qu'à titre d'exemples non limitatifs de mise en oeuvre du procédé de l'invention :

Sur ces dessins :

- la figure 1 représente, schématiquement, une portion d'une scène constituée par une zone de circuits imprimés, analysée et contrôlée, ligne par ligne selon le procédé de l'invention ;

- la figure 2 représente, le signal analogique primaire délivré pour une portion de ligne, lors de l'analyse, selon le procédé de l'invention du circuit imprimé de.la figure 1,

- la figure 3 représente, le signal binaire secondaire, délivré après seuillage du signal analogique primaire de la figure 2 ;

- la figure 4 shématise une variante, selon l'invention, de la forme du tableau de segments correspondant au signal analogique de la figure 2 ;

- la figure 5 décrit, sous forme d'organigramme et sur une de ses variantes, les principes généraux et le séquencement global du procédé électronique automatique d'analyse et de contrôle du graphisme, selon l'invention ;

- la figure 6 décrit, sous forme d'organigramme et en conformité avec la variante décrite figure 5, le séquencement, pour chaque ligne, des étapes du traitement électronique de suivi de formes ;

- la figure 7 décrit, sous forme d'organigramme et en conformité avec la variante du procédé de l'invention décrite figure 5, une solution recommandée de traitement des segments d'une ligne ;

- la figure 8 décrit, sous forme d'organigramme et en conformité avec la variante du procédé de l'invention décrite figure 5, une solution recommandée de traitement des formes d'une ligne, aboutissant à la génération des alarmes d'évolution de la ligne ;

- la figure 9 décrit, en conformité avec la variante du procédé de l'invention décrite figure 5, une solution recommandée d'application des règles de suivi d'évolution des formes ;

- la figure 10 décrit, sous forme de tableau à double entrées, une des règles de suivi de formes selon l'invention appliquées à la mise à jour des paramètres du comptage de segments (s,j,i.t compt) ; et,

la figure 11 représente une vue en perspective du dispositif de contrôle utilisé pour mettre en oeuvre le procédé d'analyse et de contrôle selon l'invention.

On a utilisé dans les organigrammes la notation du langage "C" connue de l'homme de l'art.

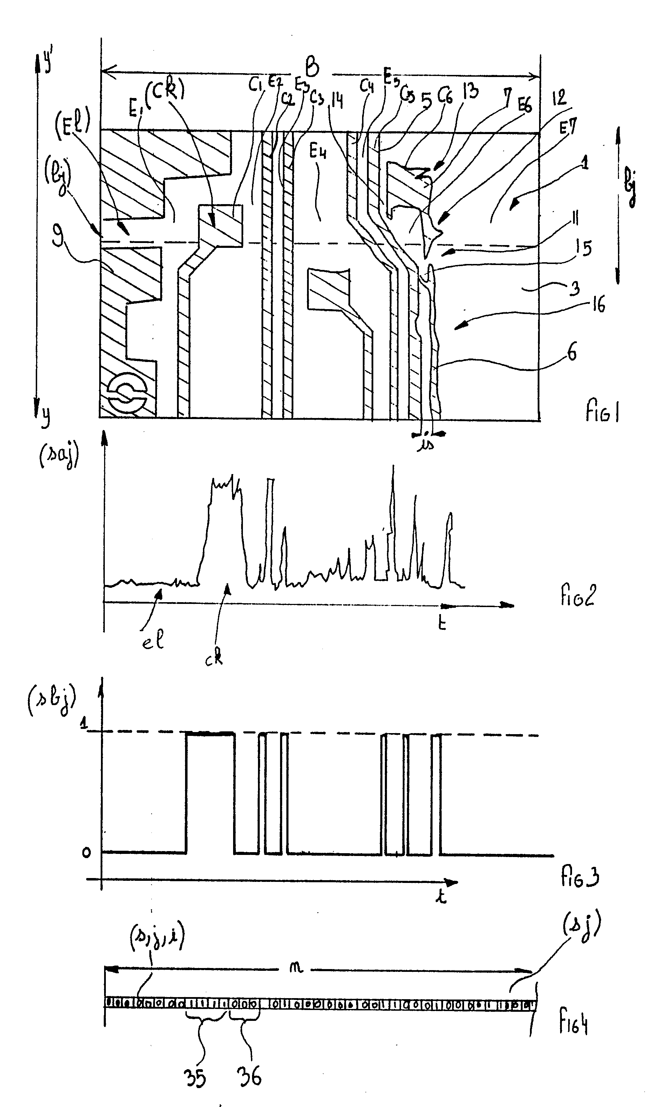

La figure 1 représente un type fréquent de produit industriel plan, produit en grande quantité et généralement en moyenne série.

Une des particularités de ce type de produit est de présenter pour chaque série, des formes graphiques très différentes. Ce produit industriel est une plaque (1) de circuit imprimé.Celui-ci est constitué essentiellement d'un support isolant (3) réalisé en verre epoxy sur lequel ont été dégagés par une méthode sérigraphique des conducteurs (5, 6), des pastilles (7) et des zones (9) de plans de masse.

Les circuits imprimés (1) sont destinés à être percés au centre de chaque pastille (7) pour maintenir par l'intermédiaire de leurs pattes, soudées, des composants électroniques. La densité de plus en plus importante des composants, le nombre des pastilles (7) et la diminution de l'isolement minimal (is) entre les conducteurs (5) et (6) nécessitent une qualité de fabrication très rigoureuse, pour assurer le bon fonctionnement ultérieur du circuit. Cet impératif de qualité et de contrôle ne cesse donc de s'accroître.

Le type de défauts les plus plus fréquemment rencontrés apparaissent figure 1. Il s'agit notamment : de coupures (11) de conducteurs, d'excroissance erratique (12) de conducteurs ou de pastilles, d'encoches (13), de défauts d'isolement (14), de court-circuits (15) ou de rétrécissements (16) de conducteurs.

La principale méthode de contrôle actuellement mise en oeuvre pour détecter ces défauts des circuits imprimés est le contrôle visuel. Mais cette technique est d'une part très onéreuse en frais de personnel et peu fiable.

Le test electrique permet de détecter certains défauts mais lorsque le circuit est entièrement terminé, c'est-à-dire que la perte de valeur ajoutée est la plus importante. En outre, cette méthode électrique ne peut déterminer les excroissances (12), les rétrécissements d'isolement (14) ni les rétrécissement (16) de conducteurs , défauts qui ont une importance capitale pour la durée de vie et la fiabilité du circuit. Plus la densité des circuits (1) et leur complexité sont grandes, plus ce problème de contrôle devient vital.

Pour résoudre ces problèmes de contrôle en cours de fabrication, de détection de tous les types de défauts graphiques, d'accroîssement de rapidité et de fiablilité, diverses techniques optiques et électroniques décrites dans le préambule ont été mises en place mais elles ne donnent pas véritablement satisfaction. Le problème de contrôle automatique évoqué sur cet exemple, relatif à la fabrication des circuits imprimés, se retrouve dans tous les domaines de l'industrie.

La variante du procédé de l'invention, décrite ci-après en regard des figures, est appliquée à l'analyse automatique, à l'aide d'un dispositif de contrôle optique et électronique (21) du type de celui décrit figure 11 , de plaques de circuits imprimés (1) pour découvrir automatiquement les défauts (11 à 16) de ces circuits (1), distinguer ces défauts et présenter les avantages de fiabilité, rapidité, simplicité et adaptabilité évoqués plus haut.

Le dispositif de contrôle (21) représenté figure 11, comporte essentiellement une partie mécanique (23) et un ensemble électronique (25). La partie mécanique (23) assure le déplacement, selon une direction (x x') d'une platine (27) face à une enceinte technique transversale (29) à l'intérieur de laquelle est déplacé selon (x x') un système optique (non représenté) d'éclairage et de saisie d'images.

Ce dispositif optique est constitué par la combinaison entre :
- une caméra
comportant un capteur linéaire, de type CCD, à axe parallèle à la direction (x x'), ladite caméra étant mise au point sur la platine (27),
- et un système d'éclairage linéaire spéculaire du champ vu par la caméra, ce système d'éclairage étant notamment réalisé à l'aide de fibres optiques. Le système optique est déplacé selon (x x') à l'intérieur de l'enceinte (29). En sorte que le système optique peut inspecter toute la scène (S) d'un objet plan placé sur la platine (27).

L'ensemble électronique (25) assure :
- l'acquisition et la digitalisation des signaux électriques d'images de la scène (S),
- la commande et la coordination des mouvements de la partie mécanique (23),
- le traitement du signal électrique d'images selon le procédé électronique de l'invention décrit ci-après,
- la détermination des alarmes de défauts.

Un écran alphanumérique (31) et un clavier (32) permettent à l'opérateur de rentrer à l'intérieur du système les paramètres numériques caractéristiques des règles de contrôle propres à la série de circuits (1) à contrôler. Les défauts détectés sont visualisés sur un écran de contrôle (33).

Le circuit (1) à contrôler est placé sur la platine (27) du dispositif du contrôle (21) et est maintenu à

7

l'aide d'un système d'aspiration (non représenté). La platine (27) est déplacée sous le contrôle de l'ensemble électronique selon des bandes (B), de direction (y y'), face au dispositif optique. La caméra linéaire du dispositif optique saisit ainsi une série de lignes parallèles (lj) côte à côté orientées selon (x x'). Le système d'éclairage émet un faisceau en direction du circuit, éclairant la zone inspectée, et inclinée sous une incidence spéculaire par rapport à l'axe de la caméra.

Le circuit (1) comporte deux zones :
- une première zone constituée des formes primaires (Ck) distantes les unes des autres et formées par les parties en cuivre du circuit imprimé c'est-à-dire : les conducteurs (5, 6), les pastilles (7) et plans de masse (9),
- une seconde zone constituée des formes secondaires (El), formées par les portions d'isolant entre les formes primaires (Ck).

Les caracteristiques de réflexion et de rétrodiffusion, du cuivre et de l'isolant, sont très différentes. En sorte que le faisceau d'éclairage subit deux niveaux de modulation de la part du circuit (1), l'un haut dû aux propriétés de réflexions du cuivre des formes primaires (Ck) et l'autre bas dû aux propriétés de diffusion de l'epoxy des formes secondaires (El).

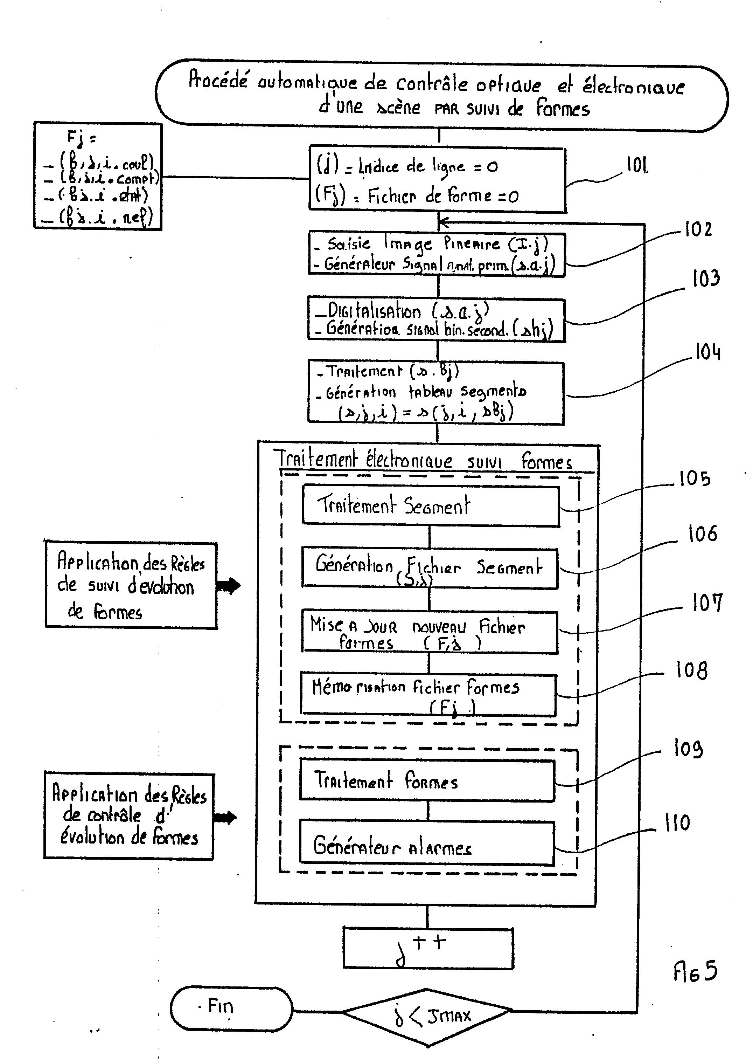

Au cours du déplacement de la platine (27) selon l'axe (y y'), la caméra reçoit à chaque ligne (lj) d'indice) (j) une image modulée (I,j) de la portion de circuit (1) éclairée. La caméra délivre à partir de l'image (I,j), un signal électrique analogique primaire (saj) dont la courbe en fonction du temps (t), pour la ligne (lj), apparaît figure 2.

Les images successives (I,j) saisies par la caméra sont parallèles et adjacentes et constituent la bande (B) inspectée. Bien entendu, le contrôle de l'intégralité d'un circuit nécessite l'analyse d'une succession de bandes (B) côte à côte, obtenues par déplacement du système optique selon l'axe (x x').

A chaque ligne (lj) d'indice (j), le signal analogique primaire (saj) est délivré à un sous ensemble électronique de digitalisation, situé à l'intérieur de l'ensemble électronique (25). Celui-ci digitalise le signal analogique primaire (saj) de la ligne, en un signal binaire secondaire (sbj).

Le signal binaire est constitué de (n) digits, sous forme séquentielle, correspondant au nombre de pixels (généralement 1024 ou 2048) du capteur linéaire.

Pour les raisons décrites plus haut, on s'aperçoit, en référence à la figure 2, que les portions (el) du signal (saj) correpondant à des formes secondaires (El) du circuit (1) présentent un niveau bas. Au contraire, le portions (ck) correspondant à des formes primaires (Ck) présentent un niveau haut. Par contre ces variations de niveau sont partiellement masquées par un bruit de signal important, provenant à la fois d'imperfections du flux lumineux, d'inhomogénéité du cuivre ou de l'isolant ou de bruit électronique.

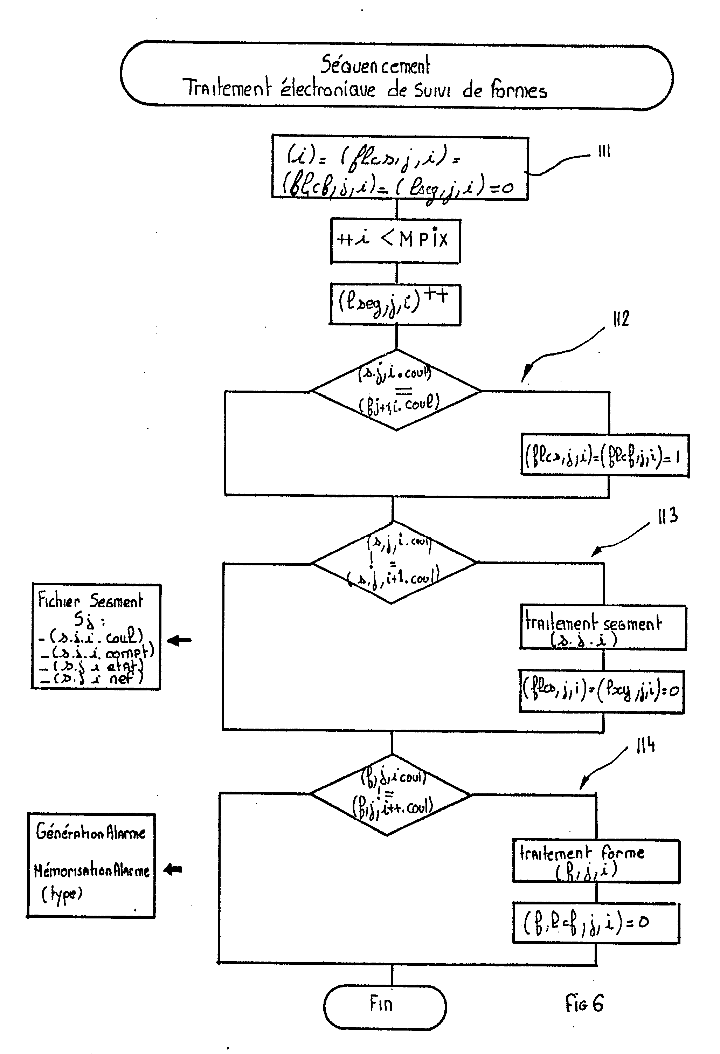

Pour effectuer la digitalisation du signal (saj), on peut utiliser un principe de seuillage adaptif, tenant compte du bruit. Un procédé de seuillage de ce type est décrit dans la demande de brevet français n° 2 223 701, THOMSON CSF, ayant pour titre "Dispositif de traitement de signaux, plus particulièrement appliqué à la détection des variations de pente de formes d'ondes". On aboutit, en appliquant une méthode de ce type, sur le signal analogique (saj) à un signal binaire (sbj) dont la courbe en fonction du temps (t) est décrite figure 3.

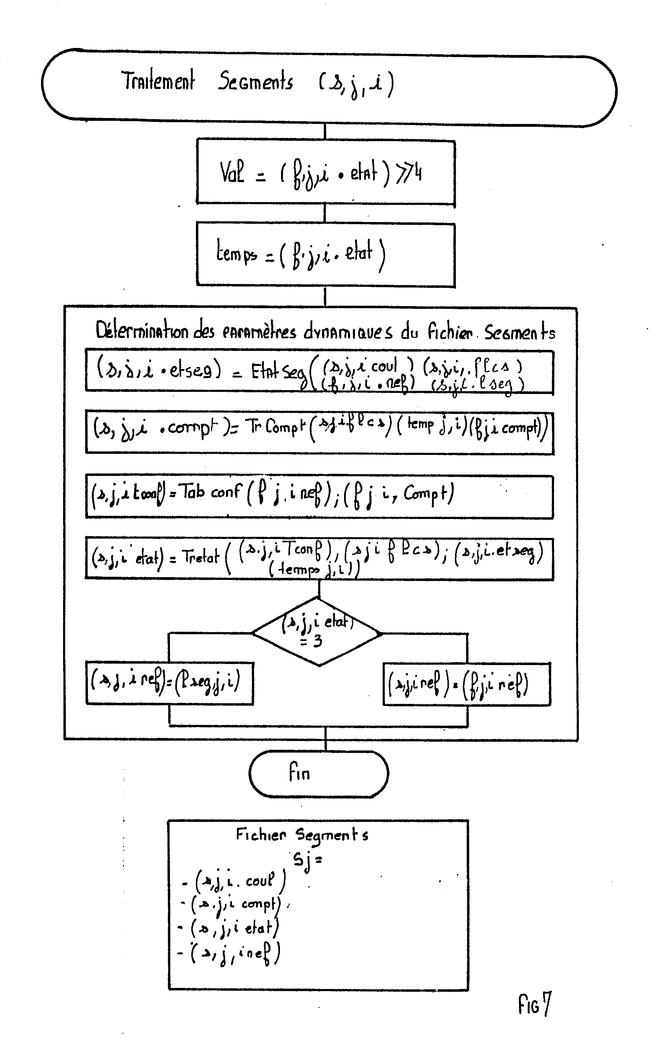

La figure 4 décrit sous forme de tableau de segments (s,j) la configuration (s,j,i) du signal (sbj). La présence du premier digit (1) est significatif de l'intersection de la ligne (lj) avec une forme primaire (Ck) et la présence du second digit (0) est significatif de l'intersection de la ligne (lj) avec une forme secondaire (El).

En outre, les digits côte à côte d'un même type dit couleur, constituent des segments (35, 36) dont la largeur et la position dans le tableau représentent l'intersection de l'image linéaire (I,j) avec les formes primaire (Ck) et secondaire (El).

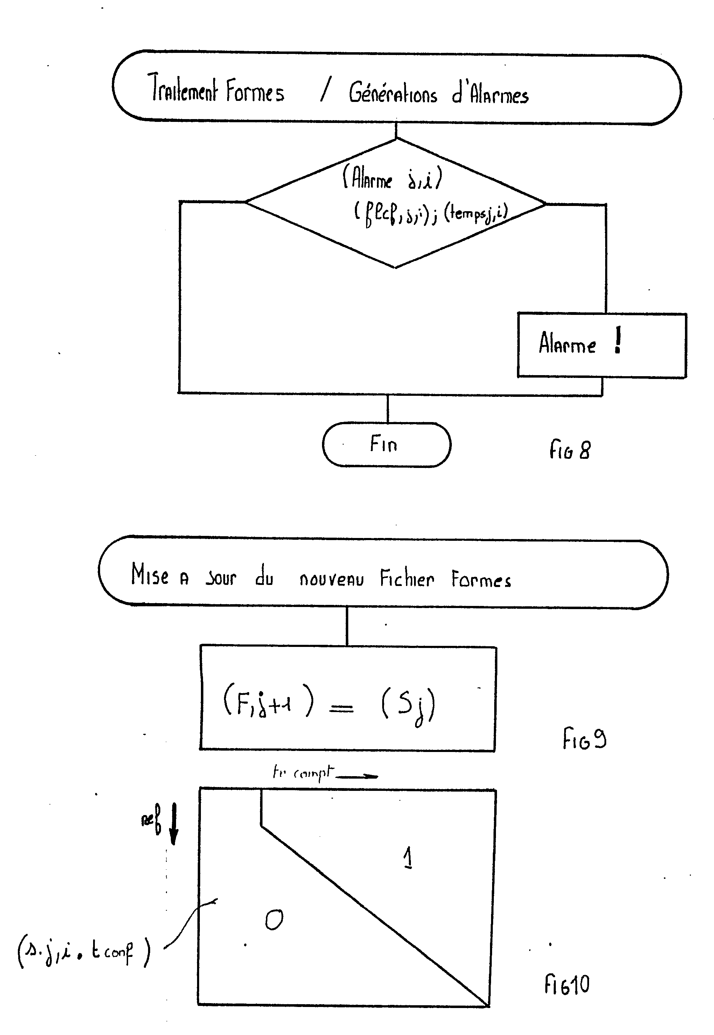

Les étapes essentielles du procédé électronique de contrôle de l'invention sont décrites figure 5 sous forme d'organigramme. Le principe consiste à faire une analyse par lignes successives (lj) et à mémoriser un Fichier de formes (F, j-1) représentatif de l'évolution des formes (Ck) et (El) intersectées préalablement à la ligne (j-1) et à modifier, à chaque ligne, ce Fichier de formes (F,j-1) en fonction des évolutions rencontrées sur la ligne (lj) pour les positions des segments du tableau (sj).

Dans la variante recommandée par l'invention, le Fichier de formes comprend plusieurs tableaux :
- un tableau de formes : (f,j) = (f,j,i.coul) constitué de (n) digits représentant l'état du tableau de segments (s,j-1,i) à la ligne précédente, (c'est-à-dire la "couleur" de chacun des pixels de la ligne) en sorte que le tableau a une configuration de même type que celle de la figure 4,
- un tableau de compteurs de formes : (f,j,i.compt) significatif de "l'âge" de chacune des formes $(C_1, C_2, C_3, C_4, C_5, C_6)$, $(E_1, E_2, ... E_7)$ en cours, c'est-à-dire se poursuivant jusqu'à la ligne précédente (lj-1),
- un tableau d'états de formes : (f,j,i.état) significatif du type d'évolution des formes (Ck) et (El) en cours avant la ligne (j),

8

- et enfin, un tableau de références de formes : (f,j,i.ref) significatif sensiblement de la largeur antérieure des formes (Ck) et (El) en cours.

Selon la variante décrite, chacun des quatres tableaux de paramètres de formes est constitué de (n) variables. Chaque variable d'indice (i) correspondant au (ième) pixel du capteur. Cette configuration est destinée à homogénéiser la forme des tableaux électroniques afin de faciliter la mise en oeuvre du procédé de l'invention sous forme de processeurs câblés.

Le procédé de l'invention, tel qu'il est décrit figure 5, consiste (étape 101) : à initialiser les indices de ligne de la bande (j = 0) et à mettre a 0 les divers éléments du Fichier de formes (F.j = 0).

Les étapes (102, 103, 104) suivantes ont été décrites plus haut en référence aux figures (2 à 4). Elles sont usuelles et consistent à saisir une image linéaire (I,j) de la ligne (lj), à générer le signal analogique primaire (saj) correspondant, à effectuer une digitalisation du signal analogique primaire (saj) et à générer le signal binaire (sbj) correspondant, afin de constituer un tableau de segments de la ligne (s,j) = (s,j,i) = (s,j,i.coul).

Une des particularités du procédé de l'invention réside dans les phases du traitement électronique de suivi de formes. Ces phases se classent en deux catégories.

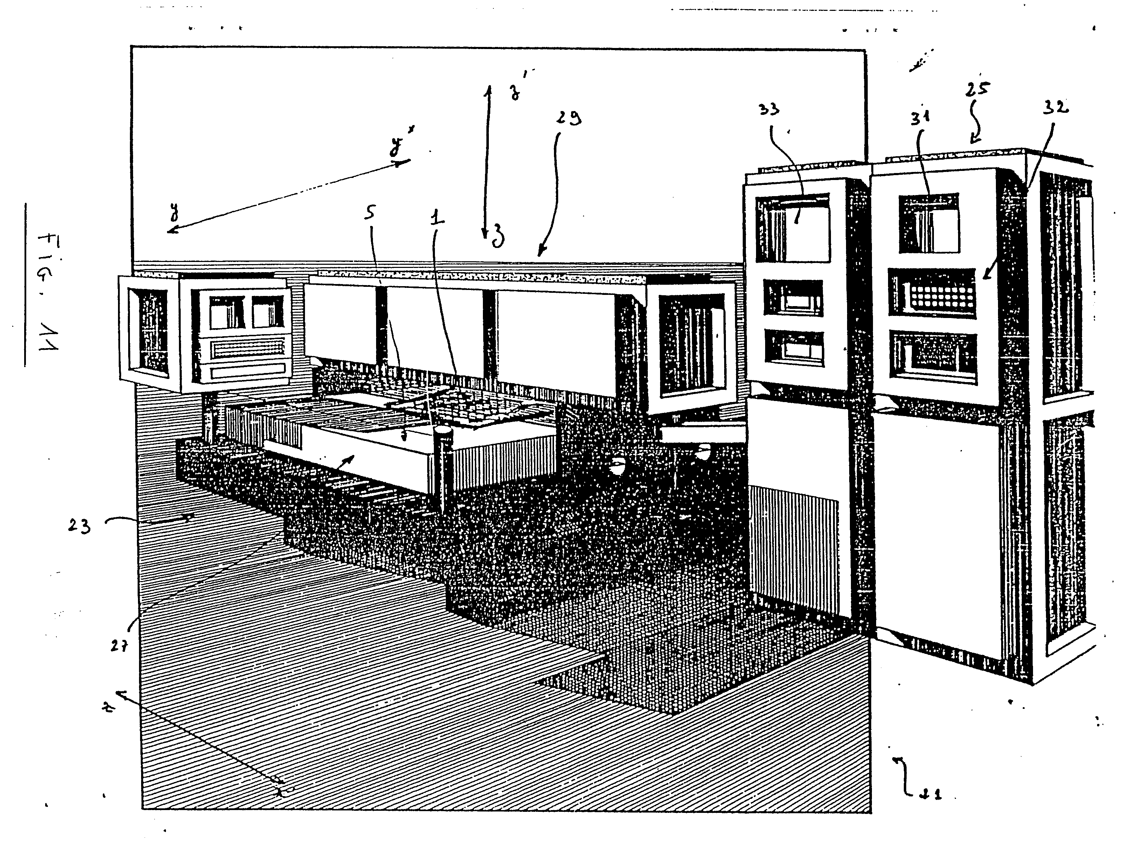

Les étapes de traitement des segments (étape 105) consistant :
- à partir du tableau électronique de segments (s,j,i) de la ligne (lj) définissant les caractéristiques géométriques, de largeur, de position et de couleur des segments de l'image linéaire (I,j), et du tableau électronique de référence de formes (f,j,i.ref) du fichier (F, j-1) de la ligne précédente,
- et en appliquant des règles fixes numériques qui seront détaillées en référence à la figure 7,
- à générer un fichier électronique de segments (S,j) (étape 106) permettant ultérieurement de mettre à jour un nouveau Fichier électronique de formes (F,j ) (étape 107) tenant compte des évolutions de formes (Ck) et (El) au cours de la ligne (I,j),
- et à mémoriser le nouveau Fichier de formes (F,j ) (étape 108).

Le Fichier de formes (F,j ) nouvellement consitué sera utilisé au cours de l'application du procédé, à la ligne suivante d'indice (j + 1). En sorte, qu'on effectue un suivi ligne à ligne des formes (Ck) et (El) intercédées.

Parallèlement au traitement segments, on effectue des étapes de traitement des formes (étape 109) détaillées plus loin, aboutissant à la génération des Alarmes (Alarmes, j,i) des défauts d'évolution de formes de la ligne, en application de règles numériques de contrôle d'évolution de formes.

Le séquencement entre les opérations de traitement de segments et de traitement de formes est décrit figure 6. Il consiste à établir, à partir des informations contenues dans le tableau électronique de formes (f, j-1)de la ligne (lj-1),(fj-1) = (f,j-1,i.coul) dans le tableau électronique de segments (s,j) = (s,j,i) :
- la liste des formes (f,j-1,i) prolongées sur la ligne (lj) par un segment (s,j,i) la recouvrant, c'est-à-dire la liste des formes (f,j-1,i) se continuant sur la ligne d'indices (j),
- et la liste des formes (f,j-1,i) interrompues au niveau de la ligne (I,j).

On associe à la validation de ce critère de continuité des formes (f,j,i), un paramètre numérique (flef, j,i), dît de confirmation de forme (fin de forme).

L'état du paramètre numérique de confirmation de formes (flef, i,j) est utilisé, ainsi que cela apparaît figure 8, dans l'application des règles numériques de contrôle d'évolution de formes aboutissant à la génération des alarmes de la ligne (lj).

De même, on établit, à partir des informations numériques contenues dans le tableau électronique de formes (fj-1,i) et celle du tableau électronique de segments (s,j,i) :
- la liste des segments (s,j,i) prolongeant, sur la ligne d'indice (j), une forme (f,j-1,i)du Fichier de formes (F,j-i) ,c'est-à-dire la liste des segments (s,j,i) recouvrant au moins partiellement une des formes (f,j-1,i) en cours.
- et la liste des segments (s,j,i) ne recouvrant aucune forme (f, j-1,i), c'est-à-dire correspondant à des formes débutantes.

On associe à la validation de ce critère de recouvrement d'une forme (f,j-1,i) par un segment (s,j,i) un paramètre numérique (fles, j,i), dît de confirmation de segments (début de forme)que l'on mémorise.

L'état du paramètre numérique. de confirmation de segments (fles, j,i) est utilisé, ainsi que cela apparaît figure 7, dans l'application électronique des règles de suivi d'évolution aboutissant à la génération à chaque ligne (lj) du nouveau Fichier de formes (F,j ).

On calcule également, pour chaque segment, un paramètre (lseg, j,i) égal au nombre de pixels consécutifs du segment, c'est-à-dire à sa largeur.

Le traitement électronique de suivi de formes, décrit figure 6, commence par une étape (111) d'initialisation consistant à annuler les valeurs des paramètres (i) = (indice de pixels), des paramètres de confirmation de formes (flef) et de segments (fles) et (lseg). Puis on fait une analyse par pixels croissants de la validation des règles de continuité et de recouvrement décrites ci-dessus.

L'etape (112) consite à vérifier si la couleur du pixel d'indice (i) du segment (s,j,i) est identique à celle de la couleur du pixel correspondant du tableau de formes (f,j-1,i)et donc de vérifier le recouvrement et la continuité des formes et des segments.

L'étape (113) détermine la fin d'un segment (s,j,i,) en comparant la couleur d'un pixel d'indice (i) à celle du suivant. On met alors en oeuvre le traitement du segment selon le processus décrit figure 7.

L'étape (114) détermine la fin d'une forme (f,j-1,i)en comparant la couleur d'un pixel (f,j-1,i)du tableau de formes (f,j-1) au suivant. On exécute alors le traitement de formes selon le processus decrit figure 8.

Dans la variante recommandée par l'invention et décrite par les dessins, les Fichiers segments (S,j) et formes (F,j) ont la même structure et se correspondent. C'est-à-dire qu'aux tableaux des paramètres de formes du Fichier de formes mémorisé et mis à jour à chaque ligne (lj), (F,j) =

- (f,j,i.coul)
- (f,j,i.compt),
- (f,j,i.état),
- et.(f,j,i.ref) ;

correspond une série correspondante de tableaux de paramètres de Segments d'un Fichier de segments de la ligne (l,j-1), (S,j-1) = - (s, j-1,i.coul)

- (s, j-1,i.compt)
- (s, j-1,i.état)
- et (s, j-1,i.ref).

La mise à jour du fichier des paramètres dynamiques du Fichier de segments (S,j) de la ligne (l,j) s'effectue à partir :

- d'une part du tableau de segments (s,j,i) déterminé directement à partir du signal binaire (s,b,j),
- et d'autre part, des paramètres du Fichier de formes (F,j-1).

Une variante de mise en oeuvre des règles de suivi de formes permettant de calculer électroniquement le Fichier de segments est décrite figure 7.

Selon cette variante appliquée spécifiquement au contrôle de circuits imprimés, l'état de formes est un paramètre correspondant au type et à l'évolution de la forme, qui peut prendre plusieurs valeurs significatives contenues dans le tableau ci-après, donné à titre d'exemple, adapté au contrôle des circuits imprimés. Ces valeurs dépendent de paramètres de référence rentrés au clavier par l'opérateur.

### TABLEAU D'ETATS DE FORMES

| ETAT | SIGNIFICATIONS |
|---|---|
| 0 | Conducteur trop petit |
| 1 | Conducteur décroissant |
| 2 | Conducteur constant |
| 3 | Conducteur croissant |
| 4 | Pastille trop petite |
| 5 | Pastille |
| 6 | Grande forme ou plan de masse |
| 7 | Isolant trop petit |
| 8 | Isolant |
| 9 | Clearance |
| 10 | Grand isolant |

On constate sur cet exemple, que les 11 valeurs numériques possibles du paramètre (f,j,i.état) permettent de définir à la fois la topologie, l'origine et l'évolution des formes en cours.

Selon l'invention, le procédé de contrôle est destiné à être câblé.

Les règles de suivi de formes consistent à déterminer successivement à partir du tableau de segments (s,j,i.coul) et du Fichier de forme (F,j-1) les tableaux de paramètres dynamiques de segments suivants :

- (s,j,i,et seg) - significatif de l'état des segments
- (s,j,i. compt) - significatif de l'historique de la forme
- (s,j,i.t conf) - significatif de la continuité de la forme
- (s,j,i.état) - significatif des règles d'évolution

Le calcul de chaque paramètre est effectué à l'aide d'un tableau numérique à plusieurs entrées dont la structure est accessible par la carte processeur. Les valeurs et la forme de chaque tableau, dépendent de l'application de contrôle en cours et du type de règles du suivi d'évolution que l'on se fixe. Néanmoins, elles peuvent être modifiées très facilement et très rapidement sans changer la structure du processeur notamment par téléchargement sur une mémoire (RAM).

A titre d'exemple de ces tableaux numériques à plusieurs entrées définissant les règles de suivi d'évolution, le paramètre dynamique de comptage de segments (s,j,i.compt) peut être, dans l'exemple présent relatif aux circuits imprimés, donné par un tableau à triple entrées dépendant des paramètres suivants : (s,j,i.fles), Val (autorisation de comptage) (f,j,i.compt).

Une variante recommandée par l'invention pour le contrôle des circuits imprimés est donnée si-après.

TABLEAU DE DETERMINATION DU PARAMETRE : (s,j,i.compt)

| f,j,i.compt | | | 0 ─────── 13,14 ──── ──── 29 |
|---|---|---|---|
| val : 0 | fles = 0 | 0 ──────────────── 0 |
| | fles = 1 | 0 ──────────────── 0 |
| val : 1 | fles = 0 | 0 ──────────────── 0 |
| | fles = 1 | 1 ──── 14,15 ──── 30 |

La détermination automatique des autres paramètres de segments proposés figure 7, et mentionnés ci-dessus, peut être faite à partir d'une succession de tableaux numériques du type précédent, dont le nombre d'entrées dépend du nombre de variables dépendantes retenues à l'intérieur du tableau de formes (F,j), du fichier segments (sj) ou de paramètres intermédiaires préalablement calculés.

En particulier, la détermination automatique du paramètre de confirmation (s,j,i.t conf) peut être faite à partir d'un tableau du type de celui décrit figure 10. Celui-ci est à double entrée , correspondant aux deux variables choisies (trcompt) et (ref). Il associe aux valeurs prises par ses variables l'état de confirmation (0 ou 1).

Il convient donc pour chaque aplication du procédé de l'invention au contrôle automatique et pour chaque type de produit possédant un graphisme particulier de se fixer :
- une série de tableaux du type ci-dessus,
- et une série de constantes situées à l'intérieur des tableaux définissant les règles de suivi d'evolution de formes.

Ces tableaux, dont la taille est imposée par le nombre des variables retenues et la capacité du circuit câblé, sont remplis de valeurs numériques déterminées à partir d'une analyse topologique et d'expériences.

A l'issue de l'application électronique de ces règles de suivi d'évolution de formes à la ligne (lj), conformément à la variante décrite figure 7, on aboutit au Fichier de segments (S,j) rassemblant des informations concernant les évolutions sur la ligne (j) des divers paramètres de tormes.

L'application du processus décrit figure 9, c'est-à-dire l'écrasement électronique de l'ancien Fichier de formes (F,j) et son remplacement par le Fichier segments (S,j) = (F,j + 1) permet de poursuivre le procédé de suivi de formes en tenant compte de ses évolutions au cours de la ligne (lj).

Selon cette variante, on construit au cours du traitement électronique de chaque ligne (lj) le fichier segments (S,j) qui va constituer le fichier formes (F,j + 1) de la ligne (lj = 1) suivante.

Il est recommandé d'inclure, indépendamment ou de préférence en combinaison, à l'intérieur du Fichier de formes (F,j) les quatre tableaux d'évolution suivants :
- tableau électronique de formes (f,j,i.coul) représentatif sous forme numérique des conditions d'intersection des formes (Ck) et (El) avec les images linéaires ; ce tableau de formes peut être constitué par le simple signal binaire (s,b,j) classé sous forme séquentielle,
- tableau électronique d'états de formes (f,j,i.état forme) représentatif sous forme numérique de la topologie de chaque forme (f,j,i), son origine et son évolution jusqu'à la ligne (j) ; les paramètres du tableau de formes prennent préférentiellement les valeurs décrites dans le tableau d'états de forme ci-dessus,

- tableau électronique de référence de formes (f,j,i.ref) représentatif sous forme numérique de la largeur des formes précédemment à leur intersection avec la ligne (l,j),

- tableau électronique de compteur de formes (f,j,i.compt) représentatif du nombre de lignes au cours desquelles les formes (f,j,i) ont été intersectées par les lignes précédant la ligne (l,j).

Dans la variante recommandée figure 7, le paramètre de référence de formes (f,j + 1,i.ref) découle du paramètre de référence de segments (s,j,i.lseg) de la ligne précédente. La valeur est déterminée en fonction d'un paramètre intermédiaire de maintien de référence dépendant des paramètres dynamiques d'état de segment (s,j,i. etseg) et d'état de forme.

(etseg) est un paramètre dynamique de segments, intermédiaire, donnant en fonction de la référence des formes en cours et des paramètres fixes de référence de largeur rentrés par l'opérateur, l'etat intrinsèque du segment en fonction de règles de largeur minimale ou largeur maximale.

Dans le cas d'un circuit imprimé, il est recommandé de donner à (etseg) les valeurs de sortie suivantes ;

## TABLEAU DES VALEURS DU PARAMETRE (etseg)

| ETAT | SIGNIFICATIONS |
|---|---|
| 1 | Forme primaire trop petite |
| 2 | Forme primaire rétrécissante |
| 3 | Forme primaire continue |
| 4 | Forme primaire trop large |
| 5 | Forme primaire grossissante |
| 6 | Forme secondaire trop petite |
| 7 | Forme secondaire normale |

Lorsque le paramètre (etseg) prend la valeur état = 3, c'est-à-dire que la forme est sensiblement constante en largeur, on donne à (s,j,i.ref) la valeur de (f,j-1,i.ref), et on maintient cette valeur en sorte que la référence de forme reste constante. Au contraire, lorsque le paramètre (etseg) prend une valeur différente de 3, on donne à la référence la valeur de la largeur locale du segment (lseg).

Ainsi qu'on peut le constater en référence à la figure 7, chacun des paramètres de formes du Fichier de formes (F,j + 1) est égal aux paramètres du Fichier segments (S,j), lesquels sont calculés pour chaque ligne à partir du Fichier de formes (F,j) et du tableau de segments (s,j,i.coul).

Le suivi d'évolution des paramètres du Fichier de formes (F,j) et notamment la définition ligne à ligne des paramètres d'états de formes permettent,selon des règles numériques de contrôle d'évolution de formes, de générer des alarmes d'évolution anormales de formes. Ces règles géométriques de contrôle d'évolution des formes primaire (Ck) et secondaire (El) sont modélisées par des critères numériques appliqués pour chaque ligne (lj) au Fichier de formes (F,j) et au tableau des segments (s,j).

En paticulier, les règles d'évolution de formes décrites à la figure 7, permettent de faire évoluer l'état des formes, d'un état normal vers un état alarmant (par exemple, état 2 évoluant vers état 1).

Une fonction électronique permet de générer une alarme, soit en fonction de l'évolution de la forme, soit en fonction de la disparition de la forme, compte tenu l'évolution de l'état de forme. Cette fonction numérique peut donc être exercée à l'aide d'un tableau à double entrée associé aux valeurs du paramètre de confirmation de formes (flcf) = (0) et au nombre d'états de formes nécessaires au suivi de formes.

Lorsqu'une alarme est détectée, il est possible, selon le procédé de l'invention de préciser :

- sa position définie par la ligne (lj) et le pixel (i),
- et le type de féfauts défini par l'état de forme (f,j,i.état) correspondant.

On remarque que la structure répétitive, ligne par ligne du processus de suivi de formes de l'invention permet un câblage simple et efficace.

Les règles de suivi de formes et de contrôle de formes peuvent être chargées en mémoire sous forme de tableaux et rapidement modifiées. Enfin, la mise en oeuvre sous forme câblée de ce procédé par les demandeurs a montré qu'il permettait avec une structure électronique simple, d'atteindre une vitesse de traitement globale d'analyse et de contrôle d'évolution de formes très rapide, correspondant à l'acquisition d'une caméra linéaire fonctionnant à 10 MHz.

L'invention ayant maintenant été décrite et son intérêt justifié sur un exemple détaillé, les demandeurs s'en réservent l'exclusivité, pendant toute la durée du brevet, sans limitaion autre que celles des termes des revendications ci-après.

**Revendications**

1) Procédé automatique, d'analyse et de contrôle ligne par ligne, sans scène de référence, du graphisme d'une scène bidimentionnelle (S), comportant au moins deux niveaux de modulation pour un faisceau d'ondes électromagnétiques d'analyse,

Le premier des niveaux de modulation, étant caractéristique d'une première zone de la scène, constituée d'une série de formes primaires (Ck), distantes les unes des autres, et le second niveau de modulation étant caractéristique d'une seconde zone de la scène, constitué d'une série de formes secondaires (El) situées entre les différentes formes primaires ;

Ce procédé d'analyse étant du type consistant :

- à émettre un faisceau d'ondes électromagnétiques en direction de la scène (S),
- à saisir une image modulée de la portion de scène éclairée par le faisceau d'ondes électromagnétiques,
- à extraire de la portion de scène (S) éclairée, une succession d'images linéaires (I,j) parallèles et adjacentes, dont la réunion constitue une bande inspectée (B) de la scène (S),
- à délivrer successivement, et pour chaque image linéaire (I,j) traitée, d'indice (j), un signal analogique primaire (saj), dont les variations de niveaux sont représentatives séquentiellement, des zones de formes intersectées par l'image linéaire (I,j),
- à digitaliser, pour chaque image linéaire (I.J) traitée, le signal analogique primaire (saj) afin de le transformer par seuillage, en un signal binaire secondaire (sbj) de (n) digits sous forme séquentielle, à l'intérieur duquel la présence du premier digit est significatif de l'intersection de la ligne (I,j), à cet endroit, avec une forme primaire (Ck), et le second digit est significatif de l'intersection de la ligne avec une forme secondaire (El), en outre les digits côte à côte d'un même type dit couleur, constituent des segments jointifs (s,i,j) représentant l'intersection de l'image linéaire (I,j) traitée avec les formes primaire (Ck) et secondaire (El) de la scène (S) ;

Ledît procédé étant caractérisé en ce que, en combinaison :

- l'on établit successivement, avant le traitement d'une nouvelle ligne (lj) d'indice (j), et l'on mémorise, un Fichier électronique évolutif de formes (F,j-1) représentatif des formes (C₁, C₂, C₃, C₄, C₅, C₆) et (E₁, E₂, E₃, E₄, E₅, E₆, E₇) antérieurement intersectées et de leur évolution sur la portion (bj) de bande (B) antérieurement traitée ligne par ligne,
- au cours du traitement de la ligne (lj) l'on traite le signal binaire secondaire (sbj) relatif à la ligne (lj), et on détermine électroniquement, pour la ligne (lj), un tableau électronique de segments (s,j) = (s,i,j,) relatif aux caractéristiques géometriques, de position et de couleur des segments (s,j,i) de l'image linéaire (I,j),
- enfin, à partir à la fois du Fichier électronique de formes (F,j-1) et du tableau électronique de segments (s,j), on établit électroniquement, selon des règles fixes numériques, dîtes de suivi d'évolution de formes, un nouveau Fichier électronique de formes (F,j ) qui sera exploité au cours de la ligne suivante d'indice (j + 1).

2) Procédé automatique selon la revendication 1 précédente, d'analyse et de contrôle électronique, ligne par ligne, du graphisme d'une scène bidimentionnelle (S), ledit procédé étant caractérisé en ce que :

- l'on établit successivement avant chaque nouvelle ligne (lj) d'indice (j) et l'on mémorise à l'intérieur du Fichier électronique évolutif de formes (F,j-1) un tableau électronique de formes (f,j-1) représentatif sensiblement, sous forme numérique, des conditions d'intersection des formes (C₁.... C₆) et (E₁... E₇) avec les images linéaires précédant la ligne d'ordre (j ),
- et après le traitement de chaque image linéaire (I,j) correspondant à la ligne d'indice (j), on met à jour, à partir du Fichier de formes (F,j-1) et du tableau de segments (s,j) de la ligne d'indice (j), le nouveau tableau de formes (f,j ) du Fichier de formes (F,j ) qui sera exploité à la ligne suivante, d'indice (j + 1).

3) Procédé automatique, selon l'une des revendications 1 et 2 précédentes, d'analyse et de contrôle électronique, ligne par ligne, du graphisme d'une scène bidimentionnelle (S), ledit procédé étant caractérisé, en ce qu'en outre :

- l'on établit successivement, avant chaque nouvelle ligne (lj) d'indice (j) et l'on mémorise à l'intérieur du Fichier électronique évolutif de formes (F,j-1) une série de paramètres numériques d'états de formes (f,j,-1,i.état forme) associés à chaque forme , chaque dit paramètre d'état de formes étant caractéristique de la topologie de la forme (f,j-1,i)de l'origine et de l'évolution de la forme dans la portion (b,j-1) de la bande (B) préalablement inspectée,

- et, après le traitement de chaque image linéare (I,j), on met à jour à partir de l'ancien Fichier électronique de formes (F,j-1)et du tableau de segments (s,j) de la ligne, les nouveaux paramètres d'états (f,j , i.état forme) des nouvelles formes (f,j .i), à l'intérieur du Fichier électronique de formes (F,j ), qui sera exploité à la ligne (lj = 1) suivante d'indice (j + 1).

4) Procédé automatique, selon l'une des revendications 1 à 3 précédentes, d'analyse et de contrôle électronique, ligne par ligne du graphisme d'une scène bidimentionnelle (S), ledit procédé étant caractérisé en ce que, en outre :

- l'on établit successivement avant chaque nouvelle ligne (lj) d'indice (j) et l'on mémorise à l'intérieur du Fichier électronique de formes (F,j-i) une série de paramètres numériques, dîts de référence de formes (f,j-1,i.ref) chacun d'eux étant associés à chaque forme (f,j-1,i)de la ligne (j-1) lesdits paramètres de référence de formes étant caractéristiques de la largeur de chaque forme précédemment à son intersection avec la ligne d'indice (j),

- et, après le traitement de chaque image linéaire (I,j), on met à jour, à partir de l'ancien Fichier de formes (F,j-1) et du tableau de segments (s,j) de la ligne en cours, d'indice (j), les nouveaux paramètres de référence (f,j , i.ref) des nouvelles formes (f,j ,i) à l'intérieur du Fichier électronique de formes (F,j ) qui sera exploité à la ligne suivante d'indice (j + 1).

5) Procédé automatique, selon l'une des revendications 1 à 4 précédentes, d'analyse et de contrôle électronique, ligne par ligne du graphisme d'une scène bidimentionnelle (S), ledit procédé étant carctérisé en ce que :

- l'on établit successivement, avant chaque nouvelle ligne (lj) d'indices (j) et l'on mémorise à l'intérieur du fichier électonique évolutif de formes (F,j-1) une série de paramètres numériques de comptage de formes (f,j-1.i.compt) associés à chaque forme (f,j-1,i) lesdîts paramètres de comptage étant caractéristiques de "l'âge de la forme dans le contrôle" c'est-à-dire du nombre de lignes au cours de laquelle la forme (f,j-1,i) a été intersectée avec continuité par les images linéaires successives précédentes,

- et après le traitement de chaque image linéaire (I,j), on met à jour à partir du Fichier formes (F,j-1) et du tableau des segments (s,j) de la ligne (j), les nouveaux paramètres de comptage de formes (f,j ,i.compt) des nouvelles formes (f,j ,i), que l'on mémorise à l'intérieur du nouveau Fichier électronique évolutif de formes (F,j ), qui sera exploité à la ligne suivante (lj + 1) d'indices (j + 1).

6) Procédé automatique, selon l'une des revendications 1 à 5 précédentes, d'analyse et de contrôle électronique, ligne par ligne du graphisme d'une scène bidimentionnelle (S), comportant des formes primaire (Ck) et secondaire (El) soumises à des règles géométriques spécifiques de contrôle d'évolution, Ledît procédé étant caractérisé en ce que :

- l'on modélise lesdîtes règles géométriques de contrôle d'évolution des formes primaire (Ck) et secondaire (El) de la scène (S) par des critères numériques constants dîts de contrôle d'évolution de formes, relatifs pour chaque ligne (j) à des rapports numériques entre le Fichier de formes(F,j-1) et le tableau des segments (s,j),

- l'on vérifie électroniquement pour chaque ligne d'indice (j), et pour chaque forme (f,j,i) de la ligne, l'application des critères numériques de contrôle d'évolution de formes entre les paramètres du Fichier de formes (F,j-1) et les paramètres du tableau de segments (s,j)

- et pour chaque ligne d'indice (j) et pour toutes les formes (f,j,i) de la ligne, où ces règles de contrôle d'évolution de formes sont enfreintes, on génère une alarme de contrôle, supposant l'existence d'un défaut au niveau de la ligne (j) sur la forme (f,j,i).

7) Procédé automatique, selon la revendication 6 précédente, d'analyse et de contrôle, ligne par ligne, du graphisme d'une scène bidimentionnelle (S), ledît procédé étant caractérisé en combinaison en ce que, pour chaque ligne d'indice (j) traitée :

- on établit, à partir des informations numériques contenues dans le tableau électronique de formes (f,j-1)et le tableau électronique des segments (s,j),

. la liste des formes(f,j-1,i) prolongées sur la ligne d'indice (j) par un segment (s,j,i) la recouvrant, c'est-à-dire la liste des formes (f,j-1,i)continuant sur la ligne d'indice (j),

. et la liste des formes(f,j-1,i)interrrompues au niveau de la ligne d'indice (j),

- on associe à la validation de ce critère de continuité ou non, de chaque forme (f,j,i) de la ligne d'indice (j), un paramètre numérique (flef, j,i) dit de confirmation de formes, que l'on mémorise,

- et on utilise, pour chaque forme (f,j,i) de la ligne d'indice (j), l'état du paramètre numérique de confirmation de la forme (flef ,j,i), pour l'application électronique à la forme (f,j,i) desdîtes règles de contrôle d'évolution de formes.

8) Procédé automatique, selon la revendication 2 précédente, d'analyse et de contrôle, ligne par ligne, du graphisme d'une scène (S) bidimentionnelle, ledît procédé étant caractérisé en combinaison en ce que, pour chaque ligne d'indice (j) traitée :

- on établit, à partir des informations numériques contenues dans le tableau électronique de formes (f,j-1)et le tableau électronique de segments (s,j),

. la liste des segments (s,j,i), prolongeant sur la ligne d'indice (j) une forme (f,j-1,i) du fichier de formes (f,j-1) c'est-à-dire la liste des segments (s,j,i) recouvrant au moins partiellement une des formes (f,j-1,i),

. et la liste des segments (s,j,i) ne recouvrant aucune forme (f,j-1,i), c'est-à-dire correspondant à des formes débutantes,

- on associe à la validation du critère de recouvrement d'une forme (f,j-1,i)par un segment (s,j,i), un paramètre numérique (fles, j,i) dit de confirmation de segments, que l'on mémorise,

- et on utilise les valeurs mémorisées des paramètres (fles, j,i) de tous les segments (s,j,i) de la ligne (j) dans l'application électronique des règles de suivi d'évolution aboutissant à la génération du nouveau Fichier de formes (F,j ) qui sera exploité à la ligne suivante d'indice (j + 1).

9) Procédé automatique, selon les revendications 3, 4 et 6 précédentes, d'analyse et de contrôle, ligne par ligne, du graphisme d'une scène (S) bidimentionnelle, ledît procédé étant caractérisé en ce que :

- l'on établit, pour chaque ligne d'indice (j), et à partir notamment des informations numériques contenues :
. dans le tableau électronique de segments (s,j,i),
. et éventuellement des différents paramètres numériques de référence de formes (f,j-1,i.ref)contenus dans le Fichier de formes (F,j-1),
. et en application de critères dimentionnels, préalablement imposés, une série que l'on mémorise de paramètres numériques d'états de segments (s,j,i.état seg) associés à chaque segment (s,j,i) de la ligne d'indice (j), chaque dît paramètre d'états de segments étant descriptif de la conformité de caractéristiques dimentionnelles locales des segments, par rapport à des références mémorisées,

- et l'on utilise, après traitement de chaque ligne d'indice (j), lesdîts paramètres numériques d'états de segments (s,j,i.état seg) pour :
. d'une part participer à l'application électronique, pour la ligne d'indice (j), des règles de contrôle d'évolution de formes aboutissant à la génération des alarmes de contrôle,
. et d'autre part, mettre à jour, à partir de l'ancien Fichier électronique de formes (F,j-1) les nouveaux éléments du Fichier de formes (F,j ) de la ligne suivante, d'ordre (j + 1) et notamment les références de formes (f,j .ref) de la ligne suivante.

10) Procédé automatique, selon la revendication 2 précédente, d'analyse et de contrôle, ligne par ligne, du graphisme d'une scène (S) bidimentionnelle, ledît procédé, destiné à être câblé sur une carte électronique, étant caractérisé en combinaison, en ce que :

- on donne à la fois au tableau électronique de formes (f,j-1) et au tableau électonique de segments (s,j) une structure identique constituée de n digits, selon laquelle :
. le tableau électronique de segments représente la binarisation (sbj) sur (n) pixels de l'image linéaire (I,j),
. et le tableau électronique de formes (f,j-1) est représentatif sous forme binaire de la topologie d'intersection des images linéaires précédant l'image (I,j), avec les formes (Ck) et (El) de la scène (S).

11) Procédé automatique, selon la revendication 10 précédente, d'analyse et de contrôle, ligne par ligne, du graphisme d'une scène (S) bidimentionnelle, ledît procédé étant caractérisé en ce que après traitement de chaque ligne (lj) d'indices (j), on modifie le tableau de formes en lui donnant la structure (f,j .i) identique à la structure du tableau de segments(s,j-1,i) de la ligne d'indice (j-1).

12) Procédé automatique, selon l'une des revendications 1 à 11 précédentes, d'analyse et de contrôle, ligne par ligne, du graphisme d'une scène (S) bidimentionnelle, ledit procédé étant caractérisé en ce que :

- l'on établit successivement, avant le traitement d'une nouvelle ligne d'indice (j), un Fichier électronique évolutif de formes (F,j-1) comportant une structure constituée de divers tableaux de paramètres, et notamment :
. d'un tableau de formes(f,j-1,i) comportant une succession de paramètres de couleur (f,j-1,i.coul) significatifs de l'intersection vers les différentes formes (Ck) et (El),
. un tableau de compteur de formes(f,j-1,i.compt),chaque paramètre de formes étant significatif de l'âge de la forme dans le suivi,
. un tableau d'états de formes(f,j-1,i.état), chaque paramètre d'états de formes étant significatif du type de l'évolution et de l'état de la forme,
. et un tableau de référence de formes (f,j-1,i.ref), chaque paramètre de référence de formes étant significatif de la largeur des formes en cours,

- au cours du traitement de la ligne d'indice (j), on construit, selon des règles numériques d'évolution de formes, un Fichier de segments (Sj), à partir du Fichier de formes (F,j-1)et des renseignements d'intersection des formes (Ck) et (El) avec la ligne (lj), contenus dans le signal binaire secondaire (sbj),

ledit Fichier de segments (Sj) ayant une structure de tableau idendique à celle du Fichier de formes(F,j-1) et comprenant une série de tableaux de paramètres dynamiques de segments notamment :

. tableau de segments (s,j,i.) = (s,j,i.coul),

. tableau de compteur de segments (s,j,i.compt).

. tableau d'états de segments (s,j,i.état),

. tableau de référence de segments (s,j,i.ref),

- on fixe les valeurs du Fichier de formes (Fj + 1) de la ligne suivante égale à celle correspondante du Fichier segments (Sj) de la ligne en cours.

13) Procédé automatique, selon l'une des revendications 1 à 12 précédentes, d'analyse et de contrôle électronique, ligne par ligne, du graphisme d'une scène (S) bidimentionnelle, ledit procédé étant caractérisé en ce que :

- l'on se fixe des règles numériques d'évolution de formes constituées par des relations linéaires, des divers paramètres du Fichier de formes (Fj) et du Fichier de segments (Sj) à la ligne (lj),

- et l'on établit ces relations sous la forme d'une série de tableaux numériques d'evolution de formes (Tm) à (en) entrées,

- l'on mémorise lesdits tableaux numériques d'évolution de formes,

- chaque tableau (Tm) définit en fonction des (en) paramètres d'entrées (pm,i,j) la valeur du paramètre de sortie (sm,i,j) du Fichier de formes (Fj + 1) de la ligne suivante.

14) Procédé automatique, selon l'une des revendications 1 à 13 précédentes, d'analyse et de contrôle, ligne par ligne, du graphisme d'une scène (S) bidimentionnelle, ledit procédé étant caractérisé en ce qu'il est appliqué au contrôle d'éléments entrant dans le cycle de fabrication du support (1) de circuits électroniques, et notamment :

- de maques d'insolation,

- de couches de sérigraphie,

- de couches gravées,

- de support de circuits électroniques,

et selon lesquels, les formes primaires sont constituées par les portions de conducteurs (5, 6) pastilles (7) et plans de masse (9),

et les formes secondaires sont constituées par les portions d'isolant.

fig 1

fig 2

fig 3

fig 4

Procédé automatique de contrôle optique et électronique d'une scène par suivi de formes

$F_j$ =
- $(\beta, \delta, i . coul)$
- $(\beta, \delta, i . compt)$
- $(\beta \delta . i . état)$
- $(\beta \delta . i . ref)$

$(j)$ = Indice de ligne = 0
$(F_j)$ = Fichier de forme = 0 — 101

- Saisie Image Primaire $(I.j)$
- Générateur Signal Anal. prim. $(s.a.j)$ — 102

- Digitalisation $(s.a.j)$
- Génération signal bin. second. $(sh_j)$ — 103

- Traitement $(s.B_j)$
- Génération tableau Segments $(s,\delta,i) = s(\delta, i, sB_j)$ — 104

Traitement électronique suivi formes

Traitement Segment — 105

Application des Règles de suivi d'évolution de formes ➤

Génération Fichier Segment $(S,\delta)$ — 106

Mise à jour nouveau Fichier formes $(F,\delta)$ — 107

Mémorisation Fichier Formes $(F_j)$ — 108

Traitement Formes — 109

Application des Règles de contrôle d'évolution de formes ➤

Générateur alarmes — 110

$j^{++}$

Fin

$\delta < J_{max}$

Fig 5

Fig 6

0 275 721

Séquencement
Traitement électronique de suivi de formes

Traitement Segments $(s, j, i)$

Val = ( $\beta, j, i$ . etat ) $\gg 4$

temps = ( $\beta, j, i$ . etat )

Détermination des paramètres dynamiques du fichier Segments

$(s, j, i$ . etseg) = Etat seg $\begin{pmatrix} (s, j, i \text{ coul}) & (s, j, i, \beta \ell cs) \\ (\beta, j, i . ref) & (s, j, i . \ell seg) \end{pmatrix}$

$(s, j, i$ . compt $) =$ Tr Compt $(s, j, i, \beta \ell cs)$ ( temp $j, i$ )( $\beta, j, i$ compt)

$(s, j, i$ t conf) = Tab conf $(\beta j, i$ ref )$; ( \beta j i,$ Compt)

$(s, j, i$ etat) = Tretat $\begin{pmatrix} (s, j, i \text{ T conf}), & (s j i \beta \ell cs) \\ (\text{temps } j, i) \end{pmatrix}; (s, j, i$ . etseg)

$(s, j, i$ etat) $= 3$

$(s, j, i \text{ ref}) = (\beta \text{ seg } j, i)$

$(s j, i \text{ ref}) = (\beta, j, i \text{ ref})$

Fin

Fichier Segments
Sj =
- $(s, j, i$ . coul )
- $(s, j, i$ compt) ,
- $(s, j, i$ etat )
- $(s, j, i$ ref )

FIG 7

Traitement Formes / Générations d'Alarmes

$$(Alarme \; \dot{o}, i)$$
$$(\beta \ell c \beta, \dot{o}, i') ; (temps \dot{j}, i)$$

Alarme !

Fin

Fig 8

Mise A Jour du nouveau Fichier Formes

$$(F, \dot{o}+1) = (S_j)$$

Fig 9

tr compt ⟶

ref ↓

1

0

$$(\delta \cdot \dot{j}, i \cdot t_{conf})$$

Fig 10

FIG. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | 2EME CONGRES AFCET-IRIA, RECONNAISSANCE DES FORMES ET INTELLIGENCE ARTIFICIELLE, Toulouse, 12-14 septembre 1979, tome III, pages 249-256; J. BAJON et al.: "Extracteur rapide de caracteristiques d'image vidéo destiné à la robotique" * En entier * | 1-4,14 | G 06 F 15/70<br>G 01 N 21/88<br>G 06 K 9/50 |
| Y | US-A-4 442 542 (LIN) * Abrégé * | 1-4,14 | |
| A | EP-A-0 107 789 (SIEMENS) * Page 2, lignes 1-33 * | 1 | |
| A | US-A-4 183 013 (AGRAWALA et al.) * Colonne 2, lignes 39-65; figures 3A,3B * | 1 | DOMAINES TECHNIQUES RECHERCHES (Int. Cl.4)<br><br>G 06 F 15/70<br>G 06 K 9/00 |
| A | FR-A-2 179 421 (ERNST LEITZ GmbH) * Page 17, ligne 24 - page 18, ligne 21 * | 1 | |
| A | US-A-4 468 808 (S. MORI et al.) * Colonne 5, lignes 3-10; colonne 6, ligne 10 - colonne 7, ligne 13; revendication 1; figures 4,5,7,8 * | 1-4 | |

--- -/-

Le présent rapport de recherche a été établi pour toutes les revendications

| Lieu de la recherche | Date d'achèvement de la recherche | Examinateur |
|---|---|---|
| LA HAYE | 21-09-1987 | SONIUS M.E. |

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 135 302 (LLOYD DOYLE LTD) <br> * Page 10, ligne 13 - page 11, ligne 17; abrégé * | 1,14 | |

**DOCUMENTS CONSIDERES COMME PERTINENTS**  Page 2

-----

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 21-09-1987 | SONIUS M.E. |